# EUROPEAN PATENT SPECIFICATION

(11) **EP 0 800 974 B1**
(45) Date of publication and mention of the grant of the patent: **07.07.2004**
(21) Application number: 97302446.6
(22) Date of filing: 09.04.1997
(51) Int. Cl.: B60T 13/26

(54) **Valve for vehicle braking system**
Ventil für Fahrzeugbremssystem
Valve pour système de freinage de véhicule

(30) Priority: 09.04.1996 GB 9607384
(43) Date of publication of application: 15.10.1997
(73) Proprietor: WABCO AUTOMOTIVE U.K. LIMITED, Morley, Leeds, LS27 0HQ (GB)
(72) Inventor: Baines, Robert George, West Lane, Selby YO8 8LR (GB); Brooks, James Andrew, Tadcaster, North Yorkshire LS24 8AD (GB); Wellings, Paul Stephen, Pontefract, West Yorkshire WF9 1LX (GB)
(74) Representative: Chettle, Adrian John

(56) References cited:
- EP-A- 0 642 961
- EP-A- 0 642 962
- DE-A- 2 324 873
- DE-A- 3 212 930

## Description

This invention relates to a valve for a vehicle braking system and particularly to a charging and protection valve arrangement of an air braking system.

Wheel brakes of larger vehicles, such as trucks and buses, use air under pressure as an actuating/release medium. An engine driven pump usually supplies air at high pressure to control valves which direct air to service brake and handbrake (parking brake) actuation circuits. One or more air reservoirs are provided to ensure an adequate volume of pressurized air is available under all conditions of use. Means are usually provided to take the pump off load when the air reservoirs are fully charged.

Typically a foot operated valve admits air under pressure to actuate the service brake, whereas a hand operated valve is used to release a handbrake against the effect of a pre-loaded spring; this latter arrangement ensures that the handbrake can be applied and maintained in the event of a failure of air system. The handbrake may also be used as an emergency brake in the event of failure of the service brake circuit or air pump.

Two service brake circuits are usually provided for safety reasons. Furthermore a circuit for auxiliaries may be provided in addition to the handbrake circuit.

A rather complex control valve is required to ensure that an air leak in one circuit does not result in loss of pressure in all circuits, and furthermore that the pump does not continue to supply pressurized air to the failed circuit at the expense of the other circuits. Thus valve elements of the control valve are usually sensitive to both pressure and flow.

A particular problem arises in connection with a handbrake circuit since it must be ensured that the vehicle driver cannot release the handbrake before adequate working pressure is available in the service brake circuits. Such a situation may occur after the vehicle has been left overnight, and where the service brake reservoirs are empty (due for example to a slow leak) yet the handbrake reservoir remains fully charged.

EP-A-0642962 provides a solution to this problem by ensuring that pressure in the handbrake circuit cannot exceed pressure in one or more service brake circuits.

For safety reasons legislation requires that the handbrake should not be able to be released until 1 the service brake is capable of operating at a predetermined level of effect - the present minimum level may be increased in the future due to more severe requirements of new legislation. Thus the combined effect of the two usual service brake circuits must exceed a certain statutory threshold.

Valve elements seldom operate in unison even if matched rather accurately. Selective assembly of control valves is expensive. In a typical truck brake system the two service brake circuits are protected by identical valve elements which must be opened to allow the respective circuits to be charged. Inevitably tolerance variation ensures that one element opens before the other, and thus one circuit is preferentially charged. The flow of air through the open valve element may cause a slight upstream pressure drop which, whilst insufficient to allow the open valve to close, nevertheless ensures that the closed valve remains substantially closed. Thus, in practice the rate of pressure increase in the service brake circuits is different, and the phenomenon of the 'hungry' valve results in the air flow into one circuit increasing rapidly whilst air flow into the second circuit increases only marginally.

At a certain minimum pressure determined by valve characteristics, the second valve element will open fully to allow the second circuit to charge. This minimum pressure can be quite high and result in a significant difference between the operating effectiveness of the two service brake circuits whilst the circuits are being charged. The divergence of the charging rates of the service brake circuits is disadvantageous since it is somewhat unpredictable, and system pressure may be sufficient to permit the handbrake to be released when the sum of braking available from the service brake circuits is insufficient to meet a legal minimum.

Accordingly the present invention provides a control valve which avoids initial charging of the service brake circuits through the usual valve elements, and thus minimizes the effect of divergence of charging rates due to differences between the valve elements.

EP-A-0642961 discloses a protection valve for a dual circuit braking system corresponding to the pre-characterizing portion of claim 1.

According to the invention there is provided a fluid assembly of a dual circuit braking system of a vehicle, the assembly comprising an inlet for connection to a source of fluid under pressure, first and second outlets for connection to respective first and second braking circuits, each of said outlets being connected to said inlet by respective first and second fluid supply ducts, each of said first ducts including a respective flow sensitive non-return valve, and each of said second ducts including in series a fluid restrictor, and a non-return valve, characterized in that said second ducts each include a charging valve downstream of the respective fluid restrictor, each of said charging valves having an inlet port, an outlet port, a signal port and a valve element movable in response to fluid pressure at the respective signal port to close communication between one respective inlet port and outlet port, the signal port of one charging valve associated with one circuit of the braking system being connected to the respective outlet of the other circuit whereby loss of pressure at one of said outlets results in closure of the associated charging valve.

In this way both service brake circuits are supplied at a substantially equal rate via the respective second ducts until pressure in the first ducts upstream of the flow sensitive protection valves causes one of them to open. Thereafter the pressure in one circuit may increase in advance of the other circuit due to the known 'hungry' valve effect, but the pressure in both circuits will nevertheless have reached an acceptable minimum before such divergence occurs.

The signal port ensures that failure of one service brake circuit will cause pressure in the other service brake circuit to close the movable valve element, thereby preventing a continuing flow of fluid under pressure to the failed circuit. The flow sensitive valve in the respective first duct closes conventionally to prevent continuing supply of fluid under pressure to the failed circuit.

Preferably the charging valves comprise a bore having a signal piston movable therein against a return spring to close communication between the respective inlet and outlet ports. In the preferred embodiment said signal piston has a peripheral step about the head thereof, defining with the bore an annular chamber when the signal piston is in the return condition, the signal port opening into said chamber.

Preferably the signal piston comprises a skirt and a head, the thickness of the skirt exceeding the radial width of said chamber.

In the preferred embodiment a non-return valve is provided in the charging valve and comprises a secondary piston slidable within the skirt of the respective signal piston, a light spring biasing said pistons apart. The inlet port may be provided in one end wall of charging valve bore, the head of said secondary piston closing said inlet port under the influence of the light spring. Preferably the head of the secondary piston includes a continuous upstanding rim thereby to define a chamber into which said inlet port opens. The outlet port may be provided in the side of said bore.

Other features of the invention will be apparent from the following description of a preferred embodiment shown by way of example only in which
Fig. 1 illustrates the valve elements of the present invention using conventional fluid symbols; and
Fig. 2 is a somewhat schematic partial circuit diagram illustrating the present invention.

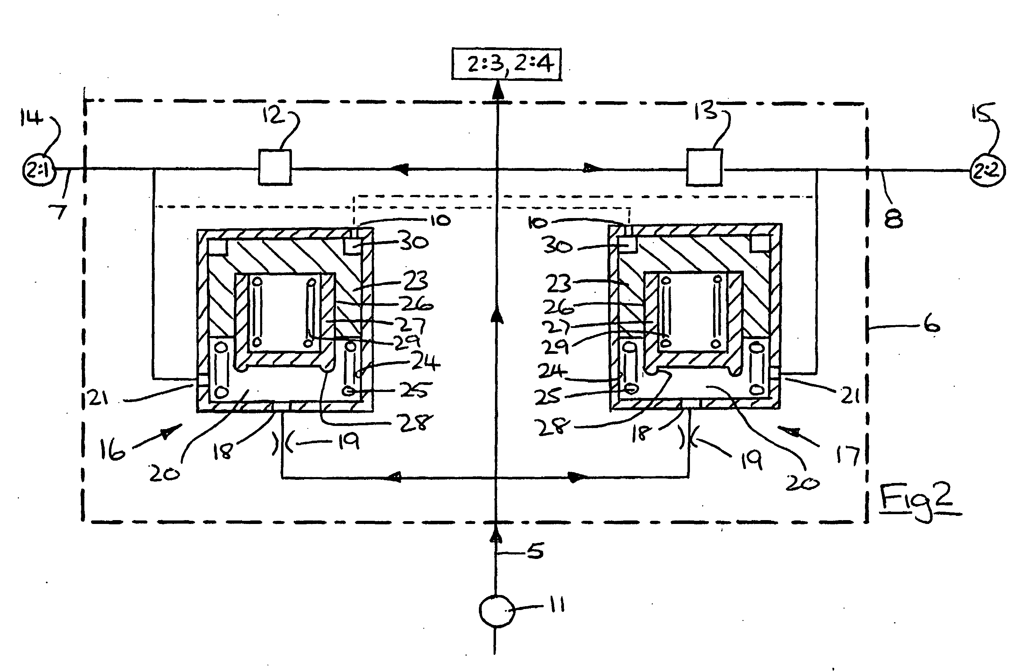

With reference to the drawings, and particularly Fig. 2, a source of fluid pressure (11), for example a pump, supplies fluid to an inlet (5) of a protection valve (6) having outlets (7,8) for connection to service brake circuits (14,15); these circuits are conventionally marked 2:1 and 2:2. The protection valve (6) includes valve elements (12,13) which open at a predetermined minimum pressure to permit the brake circuits to be charged. Such valve elements (12,13) are conventional.

Identical charging valves (16,17) have respective input ports (18) connected to the source (11) through respective restrictors (19), and output ports (21) connected to respective service brake circuits (2:1, 2:2) downstream of valve elements (12,13).

Each charging valve includes a main signal piston (23) movable from an open condition at one end of a piston bore (24) (as illustrated) to a closed condition whereby fluid communication between the inlet and outlet ports is prevented. As illustrated the respective inlet port (18) is coaxial with the bore (24) and the respective outlet port (21) is at the side thereof. The signal piston (23) is biased to the open condition by internal coil spring (25) which reacts on the closed end of the piston bore (24).

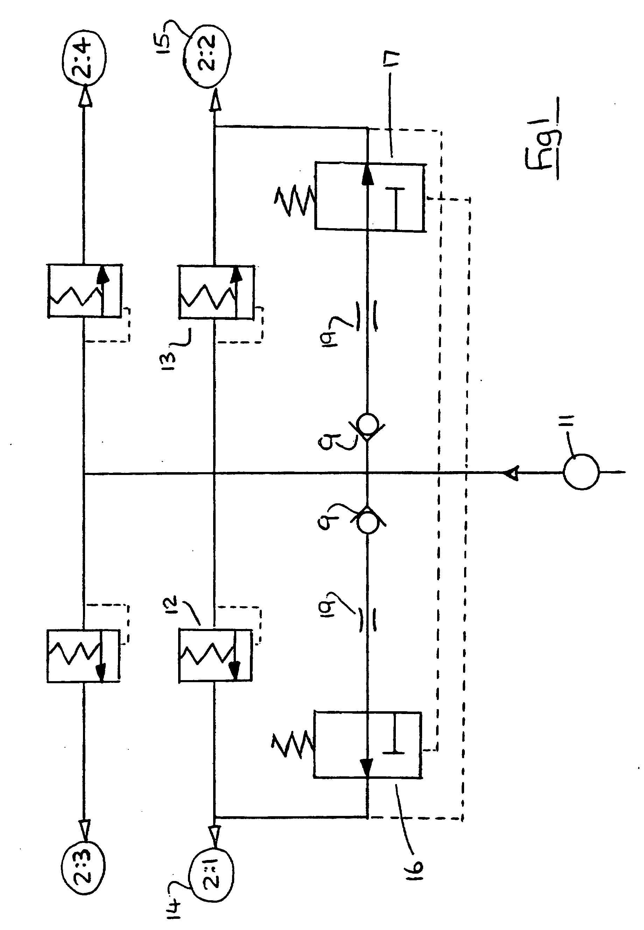

The signal piston (23) has a blind bore 26 in the underside thereof in which is received a secondary piston (27) having a continuous annular upstanding bead (28) on the head thereof. The pistons (23,27) are biased apart by light spring 29. The secondary pistons 27 and light springs 29 constitute the respective non-return valves illustrated schematically in Fig. 1.

Fluid pressure downstream of a respective bypass valve (16,17) is admitted to a signal port (10) of the other valve, and introduced into an annular chamber (30) formed by a peripheral step in the head of the signal piston (23). As illustrated in the drawing the radial width of the chamber (30) is less than the radial width of the skirt of the signal piston (23).

The circuit diagram of Fig. 1 uses conventional fluid symbols to illustrate the arrangement. Handbrake and auxiliary circuits (2:3, 2:4) are also depicted. The various fluid components are conveniently formed and housed in a single valve body, represented schematically by chain dot line 6 of Fig. 2, or may be arranged separately.

Operation of the device with reference to Fig. 2 is as follows:

With no pressure in the system the signal piston (23) is biased against one end of the bore (24) by spring (25). The secondary piston (27) is biased by light spring (29) to the other end of the bore (24), and the annular bead (28) closes inlet port (18).

As pressure increases at the source the secondary piston (27) moves against light spring (29) to open communication between respective inlet ports (18) and outlet ports (21). The valve elements (12,13) remain closed. The secondary piston (27) performs the function of a non-return valve and is not flow sensitive. Accordingly the pistons (27) move to the open condition at substantially the same low pressure, and the service brake circuits are filled at substantially the same rate via respective charging valves (16,17).

Service brake pressure acts in chamber (30) but generates insufficient force to overcome the combined effect of spring (25), and fluid pressure acting in chamber (20) on the head of secondary piston (27) and on the skirt of signal piston (23).

At a high threshold valve elements (12,13) begin to open and one of them may permit the associated service brake circuit to reach maximum pressure more quickly than the other. This however occurs at a pressure above that which is sufficient to provide adequate service brake performance, and thus it is ensured that the sum of braking available from the service brake circuits is sufficient to meet the legal minimum at the time when the handbrake is capable of being released. Accordingly, the charging valve of the present invention shifts the 'hungry' valve effect to a point above a relatively high threshold.

The bypass valve must also function correctly in the event of failure of a service brake circuit, and accordingly the structure provides the following features.

In the event of a leak upstream of the valves (16,17) when the pump is not working, the respective secondary piston (27) will move under the action of light spring (29) to close the inlet port (18). This non-return valve function ensures that pressure in the service brake circuits is maintained independently.

In the event of a failure of one of the service brake circuits it is essential to shut off supply to that circuit to avoid loss of pump output.

Accordingly if pressure is lost downstream of valve (17), valve element (13) will close in the conventional manner. Respective restrictor (19) will ensure that the pressure drop downstream of valve (17) results in a reduced pressure in chamber (20). However full service brake pressure in circuit (14) acts in chamber (30) of valve (17) and is sufficient to force signal piston (23) downward (as viewed) to cause inlet port (18) to be closed by secondary piston (27).

Moreover, as soon as piston (23) moves, fluid pressure in chamber (30) acts over the entire area of the head of signal piston (23), thereby ensuring that inlet port (18) is maintained closed against the effect of source pressure. Thus the failed circuit (15) is isolated.

When the circuit (15) is repaired pressure will increase due to the opening of valve element (13). As a result pressure will act through outlet port (19) on the area presented by the skirt of the signal piston (23). The resultant force supplements the force of spring (25) and the effect of inlet pressure on secondary piston (27) to urge the signal piston back to the open condition, as illustrated in the drawing.

Pressure loss downstream of valve 16 is protected in the same manner. Valve elements controlling pressure to the handbrake and auxiliary circuits depicted in Fig. 1 operate conventionally.

The restrictor (19) must be placed upstream of the respective charging valve (16,17) in order to ensure a pressure drop therein in response to a failed circuit, as explained above. The non-return valve (9;27,29) can however be located in a number of positions in order to ensure that downstream pressure is not lost due to an upstream failure.

## Claims

1. A fluid assembly of a dual circuit braking system of a vehicle, the assembly comprising an inlet (5) for connection to a source (11) of fluid under pressure, first and second outlets (7,8) for connection to respective first and second braking circuits (14,15), each of said outlets (7,8) being connected to said inlet (5) by respective first and second fluid supply ducts, each of said first ducts including a respective flow sensitive non-return valve (12,13), and each of said second ducts including in series a fluid restrictor (19), and a non-return valve (27,29), **characterized in that** said second ducts each include a charging valve (16,17) downstream of the respective fluid restrictor (19), each of said charging valves (16,17) having an inlet port (18), an outlet port (21), a signal port (10) and a valve element (23) movable in response to fluid pressure at the respective signal port (10) to close communication between one respective inlet port (18) and outlet port (19), the signal port (21) of one charging valve (16,17) associated with one circuit of the braking system being connected to the respective outlet (7,8) of the other circuit whereby loss of pressure at one of said outlets (7,8) results in closure of the associated charging valve (16,17).

2. An assembly according to claim 1 wherein said charging valves (16,17) each comprise a bore (24) having a signal piston (23) movable therein against a return spring (25) from an open condition to a closed condition, thereby to close communication between a respective inlet port (18) and outlet port (21).

3. An assembly according to claim 2 wherein a respective signal piston (23) has a peripheral step about the head thereof, said step defining with the associated bore (24) an annular chamber (30) when the signal piston (23) is in the open condition, a respective signal port (10) opening into said chamber (30).

4. An assembly according to claim 3 wherein a respective signal piston (23) has a continuous skirt, the thickness of said skirt exceeding the radial width of an associated annular chamber (30).

5. An assembly according to any preceding claim wherein a non-return valve is provided in a respective charging valve (16,17), said non-return valve comprising a secondary piston (27) having a skirt slidable within the skirt of the respective signal piston (23), a light spring (29) biasing said pistons (27,23) apart.

6. An assembly according to claim 5 wherein said pistons are coaxial.

7. An assembly according to claim 5 or claim 6 wherein an inlet port (18) is provided in one end wall of the bore (24) of a respective charging valve (16,17), the associated secondary piston (27) closing said inlet port (18) under the influence of said light spring (29).

8. An assembly according to claim 7 wherein the head of a secondary piston (27) includes a continuous upstanding rim (28) thereby to define a sealing land for an associated inlet port (18).

9. An assembly according to claim 8 wherein an outlet port (21) is provided in the side of the associated bore (24).

10. An assembly according to any preceding claim and comprising two identical charging valves in a single valve body.

## Patentansprüche

1. Fluidanordnung für ein Zweikreisbremssystem eines Fahrzeugs, wobei die Anordnung umfasst: einen Einlass (5) zur Verbindung mit einer unter Druck stehenden Fluidquelle (11), erste und zweite Auslässe (7, 8) zum Verbinden mit entsprechenden ersten und zweiten Bremskreisen (14, 15), wobei jeder der Auslässe (7, 8) mit dem Einlass (5) durch entsprechende erste und zweite Fluidzufuhrleitungen verbunden ist, wobei jede der ersten Leitungen ein entsprechendes strömungsempfindliches Rückschlagventil (12, 13) aufweist und jede der zweiten Leitungen in Reihe eine Fluiddrossel (19) aufweist und ein Rückschlagventil (27, 29), **dadurch gekennzeichnet, dass** die zweiten Leitungen jeweils ein Einzugsventil (16, 17) hinter der entsprechenden Fluiddrossel (19) aufweist, wobei jedes Einzugsventil (16, 17) einen Einlassport (18), einen Auslassport (21), einen Signalport (10) und ein in Abhängigkeit vom Fluiddruck am entsprechenden Signalport (10) bewegliches Ventilelement (23) zum Verschließen der Verbindung zwischen einem entsprechenden Einlassport (18) und Auslassport (21) aufweist, wobei der Signalport (10) eines einem Kreis des Bremssystems zugeordneten Einzugsventils (16, 17) mit dem entsprechenden Auslass (7, 8) des anderen Kreises verbunden ist, wodurch Druckverlust an einem der Auslässe (7, 8) zum Verschluss des zugeordneten Einzugsventils (16, 17) führt.

2. Anordnung nach Anspruch 1, worin die Einzugsventile (16, 17) jeweils eine Bohrung (24) aufweisen, die einen darin gegen eine Rückholfeder (25) von einem geöffneten Zustand in einen geschlossenen Zustand beweglichen Signalkolben (23) aufweist, wodurch die Verbindung zwischen einem entsprechenden Einlassport (18) und einem Auslassport (21) geschlossen wird.

3. Anordnung nach Anspruch 2, worin ein entsprechender Signalkolben (23) einen umlaufenden Absatz um seinen Kopf aufweist, wobei der Absatz mit der zugeordneten Bohrung (24) eine ringförmige Kammer (30) definiert, wenn der Signalkolben (23) im geöffneten Zustand ist, wobei sich ein entsprechender Signalport (10) in die Kammer (30) öffnet.

4. Anordnung nach Anspruch 3, worin ein entsprechender Signalkolben (23) einen kontinuierlichen Mantel aufweist, wobei die Dicke des Mantels die radiale Breite einer zugeordneten ringförmigen Kammer (30) übersteigt.

5. Anordnung nach einem der vorhergehenden Ansprüche, worin ein Rückschlagventil in einem entsprechenden Einzugsventil (16, 17) vorgesehen ist, wobei das Rückschlagventil einen sekundären Kolben (27) umfasst mit einem im Mantel des entsprechenden Signalkolbens (23) verschiebbaren Mantel, wobei eine Feder (29) die Kolben (27, 23) auseinander drückt.

6. Anordnung nach Anspruch 5, worin die Kolben koaxial sind.

7. Anordnung nach Anspruch 5 oder Anspruch 6, worin ein Einlassport (18) in einer Endwand der Bohrung (24) eines entsprechenden Einzugsventils (16, 17) vorgesehen ist, wobei der zugeordnete sekundäre Kolben (27) den Einlassport (18) unter dem Einfluss der Feder (29) schließt.

8. Anordnung nach Anspruch 7, worin der Kopf eines sekundären Kolbens (27) einen kontinuierlich aufrechten Rand (28) aufweist, um einen Abdichtungsbereich für einen zugeordneten Einlassport (18) zu definieren.

9. Anordnung nach Anspruch 8, worin ein Auslassport (21) an der Seite der zugeordneten Bohrung (24) vorgesehen ist.

10. Anordnung nach einem der vorhergehenden Ansprüche und umfassend zwei identische Einzugsventile in einem einzigen Ventilkörper.

## Revendications

1. Ensemble à fluide d'un système à double circuit de freinage d'un véhicule, l'ensemble comportant une entrée (5) destinée à être raccordée à une source (11) de fluide sous pression, une première et une seconde sortie (7, 8) destinées à être raccordées à des premier et second circuits respectifs de freinage (14, 15), chacune des sorties (7, 8) étant raccordée à l'entrée (5) par des premier et second conduits respectifs d'alimentation en fluide, chacun des premiers conduits comprenant un clapet de retenue respectif (12, 13) sensible au débit, et chacun des seconds conduits comprenant en série un organe (19) de rétrécissement de débit de fluide et un clapet de retenue (27, 29), **caractérisé en ce que** les seconds conduits comportent chacun une soupape de charge (16, 17) placée en aval de l'organe respectif (19) de rétrécissement de débit de fluide, chacune des soupapes de charge (16, 17) ayant un orifice d'entrée (18), un orifice de sortie (21), un orifice de signal (10) et un élément obturateur (23) mobile sous l'action de la pression du fluide à l'orifice respectif (10) de signal afin qu'il ferme la communication entre un orifice respectif d'entrée (18) et un orifice de sortie ( 19), l'orifice de signal (21) d'une soupape de charge (16, 17) associée à un premier circuit du système de freinage étant raccordé à la sortie respective (7, 8) de l'autre circuit si bien que la perte de pression à l'une des sorties (7, 8) provoque la fermeture de la soupape de charge associée (16, 17).

2. Ensemble selon la revendication 1, dans lequel les soupapes de charge (16, 17) comportent chacune un alésage (24) ayant un piston de signal (23) mobile à l'intérieur contre la force d'un ressort de rappel (25) d'une position d'ouverture à une position de fermeture, si bien que la communication entre l'orifice respectif d'entrée (18) et l'orifice de sortie (21) est fermée.

3. Ensemble selon la revendication 2, dans lequel un piston respectif de signal (23) possède un gradin périphérique autour de sa tête, le gradin délimitant avec l'alésage associé (24) une chambre annulaire (30) lorsque le piston de signal (23) est en position d'ouverture, un orifice respectif de signal (10) débouchant dans la chambre (30).

4. Ensemble selon la revendication 3, dans lequel un piston respectif de signal (23) possède une jupe continue, l'épaisseur de la jupe dépassant la largeur radiale d'une chambre annulaire associée (30).

5. Ensemble selon l'une quelconque des revendications précédentes, dans lequel un clapet de retenue est placé dans une soupape respective de charge (16, 17), le clapet de retenue comportant un piston secondaire (27) ayant une jupe qui peut coulisser dans la jupe du piston respectif de signal (23), un ressort peu puissant (29) ayant tendance à écarter les pistons (27, 23).

6. Ensemble selon la revendication 5, dans lequel les pistons sont coaxiaux.

7. Ensemble selon la revendication 5 ou 6, dans lequel un orifice d'entrée (18) est formé dans une paroi d'une première extrémité de l'alésage (24) d'une soupape respective de charge (16, 17), le piston secondaire associé (27) fermant l'orifice d'entrée (18) sous l'action du ressort peu puissant (29).

8. Ensemble selon la revendication 7, dans lequel la tête d'un piston secondaire (27) comporte un rebord continu en saillie (28) destiné à délimiter une portée de coopération étanche pour un orifice associé d'entrée (18).

9. Ensemble selon la revendication 8, dans lequel un orifice de sortie (21) est placé du côté de l'alésage associé (24).

10. Ensemble selon l'une quelconque des revendications précédentes, comprenant deux soupapes de charge identiques dans un seul corps de soupape.
